**Europäisches Patentamt**

**European Patent Office**

**Office européen des brevets**

(11) Veröffentlichungsnummer : **0 468 917 A2**

(12) **EUROPÄISCHE PATENTANMELDUNG**

(21) Anmeldenummer : **91810505.7**

(22) Anmeldetag : **27.06.91**

(51) Int. Cl.⁵ : **C08J 3/03, // D21H21/30 , C08L61:24**

(30) Priorität : **06.07.90 CH 2253/90**

(43) Veröffentlichungstag der Anmeldung : **29.01.92 Patentblatt 92/05**

(84) Benannte Vertragsstaaten : **CH DE FR GB IT LI SE**

(71) Anmelder : **CIBA-GEIGY AG Klybeckstrasse 141 CH-4002 Basel (CH)**

(72) Erfinder : **Renner, Alfred, Dr. Marcoup 2 CH-3286 Muntelier (CH)** Erfinder : **Kramer, Klaus, Dr. Merode Strasse W-5014 Kerpen-Horrem (DE)**

(54) **Wässrige Dispersionen von Harnstoff-Formaldehyd-Polymeren und deren Verwendung.**

㊺ Wässrige Dispersionen enthaltend 15-35 Gew.% eines Harnstoff-Formaldehyd-Polymers (UF-Polymer), welches gekennzeichnet ist durch
— ein Formaldehyd :Harnstoff (F :U)-Verhältnis von (1,25-1,40) :1,
— einen Gehalt an freiem Formaldehyd von weniger als 0,1 Gew.%,
— eine spezifische Oberfläche von 5-30 m²/g,
— ein Porenvolumen von 2-4 cm³/g,
— eine mittlere Partikelgrösse von 0,05-1 $\mu$m, und
— eine mittlere Agglomeratgrösse von 3-10 $\mu$m,
eignen sich inbesondere als Weisspigmente bei der Papierherstellung.

EP 0 468 917 A2

Gegenstand der Erfindung sind wässrige Dispersionen enthaltend 15-35 Gew.% bestimmter Harnstoff-Formaldehyd-Polymere, ein Verfahren zu deren Herstellung sowie deren Verwendung, insbesondere als Weisspigmente bei der Papierherstellung.

Harnstoff-Formaldehyd-Polymere (UF-Polymere) sind seit langem bekannt und werden auf verschiedenen Gebieten eingesetzt. Eine bekannte Anwendung bestimmter UF-Polymere ist die Verwendung als Weisspigmente bei der Papierherstellung.

So beschreibt das US-Patent Nr. 3,909,348 ein Papierprodukt enthaltend 0,5-80 Gew.%, bezogen auf die trockene Papiermasse, eines nicht porösen teilchenförmigen UF-Polymers mit einem molaren Verhältnis Formaldehyd:Harnstoff (F:U) von (1,3 bis 1,8):1 und mit bestimmter spezifischer Oberfläche, Absorptionsfähigkeit und mittlerer Agglomeratgrösse. Das dort bevorzugte und einzige beispielhaft offenbarte F:U-Verhältnis des UF-Polymers ist 1,5:1. Gemäss diesem Stand der Technik wird das synthetisierte UF-Polymer aus dem Reaktionsgemisch durch Filtration isoliert, getrocknet und im trockenen Zustand zur gewünschten mittleren Agglomeratgrösse vermahlen. Das so hergestellte teilchenförmige UF-Polymer wird entweder in trockenem Zustand oder nach Aufschlämmung mit Wasser der Papiermasse beigegeben.

Dieses vorbekannte Vorgehen ist mit Nachteilen behaftet. Zum einen beansprucht die Trocknung des Polymers vor dem Vermahlen sehr viel Energie. Zum anderen ist das trockene Produkt, welches als Weisspigment geeignet ist, ein sehr voluminöses Pulver mit einem Schüttgewicht von nur ca. 60 g/l. Durch spezielle Verpackungsmassnahmen kann ein Schüttgewicht von höchstens etwa 150 g/l erreicht werden. Somit sind auch die Transportkosten des Weisspigments vom Polymerproduzenten zum Papierhersteller sehr hoch, da sie im allgemeinen nach dem Volumen und nicht nach dem Gewicht verrechnet werden. Auch das Stäuben des feinteiligen Polymers bei der Herstellung und Anwendung ist nachteilig.

Zudem hat sich gezeigt, dass diese Produkte bei einem F:U-Verhältnis des UF-Polymers von 1,5:1 oder noch höher einen relativ hohen Gehalt an freiem Formaldehyd aufweisen, so dass sie den zunehmend strengeren Anforderungen nach Produkten mit möglichst wenig freiem Formaldehyd nicht immer genügen.

Ueberraschenderweise wurde nun gefunden, dass all diese Nachteile behoben werden können, wenn UF-Polymere mit einem tieferen F:U-Verhältnis von (1,25-1,40):1 hergestellt werden und anschliessend ohne Trocknung des Produkts einer Nassmahlung unterworfen werden. Auf diese Weise können auf direktem Wege ohne grossen Energieaufwand stabile wässrige Dispersionen mit einem hohen Feststoffgehalt (bis ca. 35 Gew.%) hergestellt werden. Dank dem hohen Feststoffgehalt können sie kostengünstig transportiert werden und als solche vom Papierhersteller direkt eingesetzt werden. Im oben definierten relativ tiefen F:U-Verhältnis des UF-Polymers ist auch der Gehalt an freiem Formaldehyd so tief, dass das Produkt allen Anforderungen genügt. Die bekannten vorzüglichen Eigenschaften des UF-Polymers als Weisspigment für Papier bleiben dabei allesamt erhalten.

Gegenstand der Erfindung sind somit wässrige Dispersionen enthaltend 15-35 Gew.% eines Harnstoff-Formaldehyd-Polymers (UF-Polymer), welches gekennzeichnet ist durch

- ein Formaldehyd:Harnstoff (F:U)-Verhältnis von (1,25-1,40):1,
- einen Gehalt an freiem Formaldehyd von weniger als 0,1 Gew.%,
- eine spezifische Oberfläche von 5-30 $m^2/g$,
- ein Porenvolumen von 2-4 $cm^3/g$,
- eine mittlere Partikelgrösse von 0,05-1 $\mu m$, und
- eine mittlere Agglomeratgrösse von 3-10 $\mu m$.

Die erfindungsgemässen Dispersionen können z.B. so hergestellt werden, dass

(i) Formaldehyd und Harnstoff in einem (F:U)-Verhältnis von (1,25-1,40):1 in einer wässrigen Lösung bei pH 6-9 und einer Temperatur von 40-100°C kondensiert werden,

(ii) das Kondensat durch Zugabe einer verdünnten wässrigen Säure bei einer Temperatur von 20-100°C geliert wird,

(iii) das Gel zerkleinert und in Wasser suspendiert wird, und die Suspension durch Zugabe einer verdünnten Base auf ca. pH 7-9 neutralisiert wird,

(iv) die Suspension einer Nassmahlung unterzogen wird, bis die angegebene mittlere Agglomeratgrösse erreicht ist, und

(v) das so vermahlene Produkt filtriert, gewaschen, gegebenenfalls zum Filterkuchen verpresst wird und anschliessend

(vi) durch Einwirkung mechanischer Scherkräfte zur Dispersion verflüssigt wird.

Nach einem anderen geeigneten Verfahren wird das aus Stufe (iii) erhaltene neutralisierte Produkt (iv) filtriert, gewaschen, gegebenenfalls zum Filterkuchen verpresst und anschliessend

(v) einer Nassmahlung unterzogen, bis die angegebene mittlere Agglomeratgrösse erreicht ist.

Die Herstellung von UF-Kondensationspolymeren mit Partikelstruktur durch Gelierung ist im allgemeinen bekannt und ist z.B. im bereits oben erwähnten US-Patent Nr. 3,909,348 oder von A. Renner in der Makromolekularen Chemie, 149, 1 (1971) beschrieben. Besonders geeignete Verfahrensbedingungen für die Stufen (i) bis (iii) der erfindungsgemässen Verfahren sind in den US-Patenten Nr. 4,018,741 und Nr. 4,101,521 beschrieben. Wie eingangs erwähnt, wird bei allen vorbekannten Herstellungsverfahren das Produkt der Stufe (iii) filtriert, getrocknet und erst dann zum Pulver vermahlen.

Die Kondensationsstufe (i) wird vorzugsweise bei pH 6-8 und einer Temperatur von 50-90°C, insbesondere bei etwa 70°C, durchgeführt. Die Konzentrationen der Reaktanden werden vorzugsweise so gewählt, dass vor der Gelierung eine ca. 20-30%ige Lösung des UF-Polymers entsteht.

Als Geliermittel bei der Gewinnung der unlöslichen, unschmelzbaren, vollständig vernetzten UF-Polymere können in Stufe (ii) die üblichen sauren Katalysatoren verwendet werden, z.B. Schwefelsäure, Sulfaminsäure, Phosphorsäure, Salzsäure, Salpetersäure, organische Säuren mittlerer Stärke mit einem pKa-Wert unter 4, wie Ameisensäure, Oxalsäure, Maleinsäure, Bernsteinsäure, Chloressigsäure und dergleichen. Vorzugsweise verwendet man als sauren Härtungskatalysator Schwefelsäure und insbesondere Sulfaminsäure.

Geeignete Mengen der als Geliermittel eingesetzten Säure sind 10-100, vorzugsweise 20-40 Millimole Säure pro Mol Harnstoff.

Bei einer bevorzugten Ausführungsform der Erfindung wird die Herstellung der UF-Polymere in Gegenwart eines Schutzkolloids durchgeführt. Typische Beispiele solcher Schutzkolloide sind natürliche Stoffe, wie Stärke, Gelatine, Leim, Traganthgummi, Gummiarabikum, modifizierte Naturstoffe, wie Carboxymethylcellulose, die Alkalimetallsalze von Carboxymethylcellulose, insbesondere das Natriumsalz von Carboxymethylcellulose, Methylcellulose, Ethylcellulose, Betahydroxypropylcellulose, Alkalimetallalginate und dergleichen, synthetische Polymere, wie Polyvinylalkohol, PolyvinylPyrrolidon, wasserlösliche Polymere und Copolymere von Acrylsäure und Methacrylsäure und ihre Alkalimetallsalze, Salze von Maleinsäure enthaltenden Copolymeren, von Copolymeren aus Styrol und Maleinsäureanhydrid und dergleichen. Die Menge der Schutzkolloide ist abhängig von ihrer Art, ihrer chemischen Struktur und ihrem Molekulargewicht. In der Regel werden sie in Mengen zwischen etwa 0,1 und etwa 10 Gew.-% , bezogen auf das Gesamtgewicht des verwendeten Harnstoffs und Formaldehyds, zugegeben. Vorzugsweise setzt man die Schutzkolloide in Mengen von etwa 0,5 bis etwa 5 Gew.-% zu. In einer besonders bevorzugten Ausführungsform wird Sulfaminsäure als Härtungskatalysator in Kombination mit einem Schutzkolloid verwendet.

Als Schutzkolloid besonders bevorzugt ist Na-Carboxymethylcellulose. Das Schutzkolloid kann geeigneterweise in Stufe (i) oder (ii) des erfindungsgemässen Verfahrens beigegeben werden. Danach wird dem Reaktionsgemisch unter Rührung eine wässrige Säurelösung bei einer Temperatur zwischen Raumtemperatur und etwa 100°C solange zugegeben, bis ein vernetztes Gel entstanden ist. Anschliessend zerkleinert man das Gel beispielsweise in einem Extruder oder in einem Schneidegranulator, einem Brecher oder einem Walzwerk.

Die Nassmahlung des UF-Polymers erfolgt vorzugsweise in einer Perlmühle. Dabei wird das Mahlgut mit Glasperlen, die mit hoher Geschwindigkeit gerührt werden, zur gewünschten mittleren Agglomeratgrösse zerkleinert. Bevorzugt wird eine mittlere Agglomeratgrösse von 5-8 μm. Die Feinheit des Produktes lässt sich beispielsweise durch geeignete Einstellung der Durchflussgeschwindigkeit und der Glasperlengrösse steuern.

Wie oben ausgeführt, kann die Nassmahlung im Anschluss an die Neutralisation nach Stufe (iii) durchgeführt werden oder bei einer alternativen Verfahrensweise erst in Stufe (v) nach der Filtration erfolgen. Im erstgenannten Fall wird das bereits vermahlene Produkt filtriert und falls zweckmässig zu einem Filterkuchen verpresst, der vorzugsweise einen Feststoffgehalt von 15-40 Gew.% aufweist und ebenfalls ein Gegenstand vorliegender Erfindung ist. Solche Filterkuchen mit hohem Feststoffgehalt eignen sich auch vorzüglich für den Transport zum Verbraucher und können an Ort und Stelle vor der Verwendung, z.B. durch Einwirkung mechanischer Scherkräfte zur Dispersion verflüssigt werden. Obwohl die Filterkuchen einen relativ hohen Wasseranteil haben, sind sie vom Aspekt her Feststoffe und können als solche gehandhabt werden.

Die erfindungsgemässen Dispersionen sind im beanspruchten Konzentrationsbereich nahezu unbegrenzt stabil und können über längere Zeit (z.B. bis zu 6 Monate) problemlos gelagert werden. Falls die definitionsgemässe Konzentration des UF-Polymers unterschritten oder überschritten wird, kann es aber zur Sedimentation des Polymers kommen.

Bei der Herstellung der erfindungsgemässen Dispersionen können, falls zweckmässig, auch Dispergiermittel verwendet werden. Geeignete Dispergiermittel sind z.B. bekannte Phosphat- oder Polyacrylatdispergiermittel. Soche Mittel sind im Handel erhältlich, beispielsweise unter der Bezeichnung Calgon (der Fa. Benkiser, Knappsack), Polysalz CAL (der Fa. BASF, Ludwigshafen), A 4775 (der Fa. Stockhausen, Krefeld) oder das Versuchsprodukt Dispergiermittel Nr. 7030 (der Fa. BASF, Ludwigshafen).

Mit Dispergiermitteln kann die Viskosität der Dispersion, falls erwünscht, erniedrigt werden bzw. bei gleicher Viskosität können Dispersionen mit einem höheren Feststoffgehalt hergestellt werden. Das Dispergiermittel wird vorzugsweise in der letzten Stufe des Herstellungsverfahrens beigegeben.

Unter den erfindungsgmässen Dispersionen werden solche mit 20-30, insbesondere mit etwa 25 Gew.% des UF-Polymers, bevorzugt.

Das am meisten bevorzugte Formaldehyd:Harnstoff (F:U)-Verhältnis des in der Dispersion enthaltenen UF-Polymers beträgt 1,26:1.

Ist das F:U-Verhältnis tiefer als der definitionsgemässe Bereich (d.h. <1,25), so entstehen mikroporöse Partikel mit einem kleineren Porenvolumen (von ca. 0,5 cm³/g), welche als Weisspigmente für Papier nicht geeignet sind. Ist das F:U-Verhältnis des UF-Polymers höher als 1,40 andererseits, entstehen Polymere, welche einen zu hohen Gehalt an freiem Formaldehyd aufweisen und aus diesem Grund unerwünscht sind. Nur in dem eng definierten molaren F:U-Verhältnis von 1,26-1,40 entstehen UF-Polymere, welche allen Anforderungen genügen. Diese Polymere weisen sphärische Submikronpartikel auf, welche zu einem gewissen Grad agglomeriert sind. Dadurch ergibt sich das definitionsgemässe Porenvolumen, das grösstenteils auf die Poren zwischen den agglomerierten kugelförmigen Submikronpartikeln zurückzuführen ist und das z.B. mittels Quecksilber-Porosimetrie bestimmt werden kann. Derartige UF-Polymere sind in der US 4,367,171 (Beispiel I) beschrieben.

Die erfindungsgemässen Dispersionen enthalten vorzugsweise UF-Polymere mit weniger als 0,05 Gew.% an freiem Formaldehyd. Ebenso bevorzugt werden UF-Polymere mit einer spezifischen Oberfläche von 7-25 m²/g und solche mit einem Porenvolumen von 3-3,5 cm³/g sowie mit einer mittleren Partikelgrösse von 0,1-1 µm, da sich solche Produkte besonders gut als Weisspigmente für Papier eignen.

Weitere mögliche Anwendungsgebiete der erfindungsgemässen Dispersion sind z.B. die Herstellung wässriger Dispersionsfarben oder wässriger Beschichtungen für Papier. Solche Anwendungen für UF-Polymere sind beispielsweise in den US-Patenten Nr. 4,307,005 und Nr. 4,367,171 beschrieben.

Bevorzugt ist aber die Verwendung der erfindungsgemässen Dispersionen als Weisspigmente bei der Papierherstellung.

Zur Herstellung des Papieres kann jeder gebräuchliche Zellstoff verwendet werden. Man kann also als Zellstoff einen chemisch behandelten Zellstoff verwenden, z.B. einen Sulfatzellstoff, Sulfidzellstoff, Sodazellstoff oder Kraftzellstoff, einen halbchemischen Zellstoff, Kurzschliff oder Mischungen dieser Stoffe. Auch andere Zellstoffe von Pflanzen oder Lumpen sind geeignet. In einigen Fällen ist es auch nicht erforderlich, nativen Zellstoff zu verwenden, sondern man kann auch Altpapier für sich oder in Kombination mit nativem Zellstoff verarbeiten. Die Schnitzel des Altpapiers können dem nativen Zellstoff entweder in trockener Form oder als wässrige Aufschlämmung zugesetzt werden.

Vorzugsweise werden die vorliegenden Dispersionen im Papier ohne anorganische Weisspigmente und ohne polymere Bindemittel verwendet.

Das UF-Weisspigmente enthaltende Papier kann auf bekannte Weise hergestellt werden Dabei werden die erfindungsgemässen Dispersionen in geeigneter Menge vor der Blattbildung der Zellstoffmischung beigegeben. Vorzugsweise enthält das Papier zwischen 0,5-10, insbesondere zwischen 1-5 Gew.% des UF-Polymers bezogen auf trockene Papiermasse. Mit den definitionsgemässen Polymeren werden eine hohe Füllstoff-Retention sowie ein sehr guter Weissgrad und hohe Opazität erreicht.

Die folgenden Beispiele erläutern die Erfindung.

Bei den in den Beispielen in % angegebenen Mengen handelt es sich durchwegs um Gewichtsprozente.

Beispiel 1:

a) Herstellung des Kondensationspolymeren:

(CH₂O: Harnstoff = 1,26; Sulfaminsäure als Geliermittel) 1260 g einer 30%igen wässrigen Formaldehydlösung werden mit 950 g deionisiertem Wasser verdünnt und auf 70°C erhitzt. Man trägt 600 g Harnstoff ein, stellt den pH auf 7,0 mit einer 10%igen Sodalösung ein und kondensiert während 2 Stunden bei pH = 7,0 und 70°C. Man kühlt auf 50°C.

Unterdessen bereitet man eine Lösung von 33,2 g Sulfaminsäure ($H_3N^+.SO_3^-$) in 1300 g $H_2O$ und erwärmt diese ebenfalls auf 50°C. Man fügt diese Lösung dem Vorkondensat in einem Guss zu, während man dieses stark rührt. Nach 8 Sek. stellt man den Rührer ab, das Reaktionsgemisch wird opak und geliert nach 11 Sek.. Die Temperatur steigt hierbei auf 69°C. Man belässt dieses Gel 2 Stunden bei 70°C, zerkleinert es und suspendiert es mittels eines hochtourigen Rührers in 4 Litern Wasser. Man stellt die Suspension auf pH = 7,0 mit einer 10%igen Sodalösung, mikronisiert sie durch Zirkulation durch eine "Dynomill" der Fa. Bachofen in Basel auf eine mittlere Agglomeratgrösse von 5,5 µm und filtriert das so behandelte Pigment ab.

Man erhält 3035 g eines schneeweissen Filterkuchens mit einem Feststoffgehalt von 20,8%. Die spezifische Oberfläche des Pigments beträgt 7,4 ± 0,2 m²/g. Das Produkt hat eine Primärpartikelgrösse von 0,4 µm und ein Porenvolumen von 2,33 ml/g und enthält 0,03 Gew.% freies Formaldehyd.

b) Herstellung einer wässrigen Dispersion (=Slurry) und deren Verwendung zur Herstellung von Papier:

b1) Viskositätsuntersuchungen

Bei dieser Prüfung wird das oben unter a) hergestellte Produkt getrocknet, und die für die Dispersion notwendigen "Slurries" werden dann aus dem getrockneten Produkt hergestellt, um auf einen Feststoffgehalt von genau 30 Gew.% zu kommen. Es versteht sich von selbst, dass sonst bei der Papierherstellung die wässrigen Dispersionen direkt verwendet werden

Folgende Viskositätswerte werden bei einem Feststoffgehalt von 30 Gew.% gemessen. Es wird die Viskosität ohne und mit Dispergiermittel erminelt.

Viskosität* ohne Dispergiermittel bei
30 Gew.% Feststoff: 650 mPas.

| Dispergiermittelmenge (%) | Viskosität* verwendetes Dispergiermittel | | |
|---|---|---|---|
| | Calgon[1]® | Polysalz CAL[2]® | A4775[3]® |
| 0,5 | 35 [4] | 480 [5] | 30 [4] |
| 1,0 | 40 | 520 | 40 |
| 1,5 | 45 | 680 | 40 |
| 2,0 | 55 | 810 | 50 |
| 2,5 | 60 | 790 | 55 |
| 3,0 | 65 | 740 | 60 |

[1] Polyphosphat der Fa. Bankiser, Knappsack

[2] Polyacrylat der Fa. BASF, Ludwigshafen

[3] Polyacrylat der Fa. Stockhausen, Krefeld

[4] Spindel 3

[5] Spindel 4

* Brookfield RVT, 100 U/min

b2) Blattbildungsversuche

Das UF-Polymer wird als 20,8 gew.%-ige "Slurry" direkt bei der Herstellung von holzfreiem Papier eingesetzt.

(i) Stoffaufbereitung

Der für die Blattbildung benutzte Zellstoff hat folgende Zusammensetzung:
80% Birkensulfat

20% Kiefernsulfat

Die Stoffmischung wird im Pulper bei 4% SD (Stoffdichte) aufgeschlagen. Die Aufschlagzeit beträgt 10 Min. Danach wird der Stoff 1 Min. 20 Sek. im Laborrefiner bei 1450 U/min (5,9 KW) auf einen Mahlgrad von 23°SR gemahlen.

Der Stoff wird zur Entwässerung 2 Min. zentrifugiert (Maschenweite des Siebes 250 μm, SD ca. 16,5%) und bei +5°C gelagert.

(ii) Blattbildungen (in Anlehnung an DIN 54358)

Die Blattbildung wird auf einer "Rapid-Köthen"-Blattbildungsanlage mit Verteilergerät durchgeführt.

Im einzelnen werden 45 g atro (absolut trocken) des gekühlten Stoffes in den Verteiler gegeben, auf 6l aufgefüllt und 10 Min. gerührt (SD = 0,75%).

Der Weisspigmentfüllstoff-Slurry (20,8 gew.%-ig) wird mittels Chemacol-Rührer 1 Min. bei 12000 U/Min. dispergiert. Die Weisspigmentsuspension wird zum Stoffgemisch in den Verteiler gegeben, und es wird auf ein Volumen von 9l mit Wasser aufgefüllt (SD = 0,5%).

Die errechnete Papierstoffmenge wird abgezapft und in den Rapid-Köthen-Blattbildner gegeben. Im Blattbildner wird die Stoffsuspension auf 0,015-0,043% verdünnt. Die gebildeten Blätter werden auf der Rapid-Köthen-Blattbildungsanlage 10 Min. bei 95°C und einem Vakuum von 800 mbar getrocknet. Die gebildeten Blätter haben ein Flächengewicht von ca. 50 g/m2. Es wird Papier ohne Weisspigment und mit jeweils 1,2, 2,4 und 3,6 Gew.% Weisspigment (bezogen auf trockene Papiermasse) hergestellt.

(iii) Prüfung

Die Weisspigment-Retention wird über eine Stickstoffanalyse nach Kjeldahl bestimmt. Die gebildeten Blätter werden auf verschiedene Eigenschaften getestet:

|  | Standard | U/F-Polymer | | |
|---|---|---|---|---|
|  | ohne Weisspigment | 1 | 2 | 3 |
| Weisspigmenteintrag | - | 1,2 % | 2,4 % | 3,6 % |
| Weisspigment-Retention | - | 71 | 62 | 73 |
| Flächengewicht (g/m$^2$) | 49 | 50 | 49 | 50 |
| Weisse (%), DIN 53145 (457 nm) | 84,4 | 86,6 | 86,9 | 86,4 |
| Opazität (%), DIN 53146 | 70,5 | 72,0 | 72,7 | 74,5 |
| Dicke (μm), DIN 53105 | 87 | 90 | 90 | 93 |
| Volumen (cm$^3$/g), DIN 53105 | 1,78 | 1,8 | 1,84 | 1,86 |

Daraus ist klar ersichtlich, dass durch Zugabe des UF-Weisspigments eine deutliche Weisse- und Opazitätssteigerung erreicht wird.

Beispiel 2:

a) Herstellung des Kondensationspolymeren:

(CH$_2$O: Harnstoff = 1,26; Sulfaminsäure als Geliermitttel; Verwendung eines Schutzkolloids)
Man löst 10,78 g einer hochmolekularen Na-Carboxymethylcellulose (Blauose 7 HFD der Fa. Aqualon) in 930 g deionisiertem Wasser und 1260 g einer 30%igen wässrigen FormaldehydLösung. Man verfährt weiter, wie dies im Beispiel 1 beschrieben ist, und man erhält nach Neutralisarion auf pH = 7,5 3507 g eines Filterkuchens mit einem Feststoffgehalt von 18,0%. Das Pigment hat eine spezifische Oberfläche von 23,5 ± 0,5 m²/g, eine Primärpartikelgrösse von 0,15 μm, ein Porenvolumen von 3,35 ml/g und einen Gehalt an freiem Formaldehyd von 0,04%.

### Beispiel 3:

#### a) Herstellung des Kondensationspolymeren

($CH_2O$: Harnstoff = 1,26; $H_2SO_4$ als Geliermittel; Verwendung eines Schutzkolloids)

Vorkondensat:

| | |
|---|---|
| $H_2O$ deionisiert | 930 g |
| $CH_2O$ 30% | 1260 g |
| Blauose 7 HFD | 13 g |
| Harnstoff | 600 g |

Gelierungskatalysator:

| | |
|---|---|
| $H_2SO_4$ (98%) | 25,5 g |
| $H_2O$ | 1300 g |

Verfahren wie in den Beispielen 1 und 2.

Gelierzeit bei 50°C      12,3 s

Neutralisation auf pH = 7,5

Ausbeute: 4850 g eines Filterkuchens mit einem Feststoffgehalt von 17,0%

| | |
|---|---|
| Spezifische Oberfläche des Pigments: | $18,9 \pm 0,4 \ m^2/g$ |
| Freier Formaldehyd: | 0,02 % |
| Primärpartikelgrösse: | 0,25 μm. |

### Beispiel 4:

#### a) Herstellung des Kondensationspolymeren:

($CH_2O$: Harnstoff = 1,33; Sulfaminsäure als Geliermittel)

| | | |
|---|---|---|
| Vorkondensat: | $H_2O$ deionisiert | 933,1 g |
| | $CH_2O$ 30 % | 1333 g |
| | Harnstoff | 600 g |
| Gelierungskatalysator: | $H_2O$ deionisiert | 1310 g |
| | Sulfaminsäure | 32,3 g |

Verfahren wie in den Beispielen 1-3.

| | |
|---|---|
| Gelierzeit bei 50°C: | 11 s |
| Filterkuchen: | 3893 9 |
| Feststoffgehalt | 20,8% |
| Spez. Oberfläche: | 6,4 ± 0,1 m²/g |
| Freier Formaldehyd: | 0,055% |
| Primärpartikelgrösse: | 0,5 μm. |

#### b) Herstellung von "Slurries":

Der Filterkuchen wird direkt in einer Kugelmühle (z.B. von der Fa. Retsch) vermahlen Man erhält eine flüssige Suspension, die ein Nicht-Newton'sches Verhalten bei der Viskositätsmessung aufweist. Man kann die Viskosität der Suspension mit Hilfe des experimentellen Dispergierhilfsmittels Nr. 7030 der BASF AG stark erniedrigen.

Viskosität von 20%igen "Slurries" in Abhängigkeit der Konzentration des Dispergiermittels und der Dreh-

geschwindigkeit des Brookfield Viskosimeters.

| Gew.% 7030 | Drehgeschwindigkeit | | | | |
|---|---|---|---|---|---|
| | 10 | 20 | 50 | 100 | [U/min] |
| 0,0 | 1,550 | 800 | 370 | 205 | Viskosität (mPa·s) |
| 0,5 | 1,600 | 675 | 220 | 100 | |
| 1,0 | 910 | 365 | 122 | 55 | |
| 1,5 | 300 | 175 | 96 | 63 | |
| 2,0 | 210 | 150 | 78 | 40 | |
| 3,0 | 150 | 80 | 40 | 30 | |

Man kann aber die "Slurry"-Konzentration auch mit Hilfe des exp. Dispergiermittels 7030 der BASF bei annehmbarer Viskosität erhöhen.

"Slurries" mit 1,5 Gew.% des Dispergierhilfsmittels 7030 (BASF): Viskosität (mPa.s) in Abhängigikeit vom Feststoffgehalt

| Feststoffgehalt Gew.% | 20 U/min | 50 U/min | |
|---|---|---|---|
| 20,8 | 485 | 210 | Viskosität |
| 21,8 | 825 | 440 | (mPa·s) |
| 22,8 | 975 | 600 | |
| 23,8 | 1,950* | 1,020* | |
| 24,8 | 3,250* | 1,600* | |

* stark zeitabhängig

c) Herstellung von Papier

Es werden Papierblätter auf der Labor-Papiermaschine hergestellt, welche die in der Tabelle angegebene Menge Weisspigment als 20%iger "Slurry" eingearbeitet enthalten.

Das Papier hat folgende Eigenschaften:

| Weisspigment (Gew.%) | 0 | 1,00 | 2,15 |
|---|---|---|---|
| Flächengewicht (g/m$^2$) | 79,7 | 79,7 | 80,2 |
| Dicke (μm), DIN 53105 | 103 | 109 | 106 |
| Weisse (%), DIN 53145 (457 nm) | 80,87 | 84,05 | 84,75 |
| Streuungskoeffizient (cm$^2$/g), TAPPI | 218 | 272 | 314,72 |
| Opazität (%), DIN 53146 | 71,3 | 75,5 | 78,2 |

Beispiel 5:

a) Herstellung des Kondensationspolymeren

(CH$_2$O: Harnstoff = 1,40; Sulfaminsäure als Geliermittel)

| | | |
|---|---|---|
| Vorkondensat: | H$_2$O deionisiert | 400 g |
| | CH$_2$O (30 %ig) | 700 g |
| | Harnstoff | 300 g |
| Gelierungskatalysator: | Sulfaminsäure | 15,25 g |
| | H$_2$O deionisiert | 460 g |

Die Edukte werden, wie in den vorhergehenden Beispielen beschrieben, umgesetzt, und das Produkt hat die folgenden Eigenschaften:

| | |
|---|---|
| Filterkuchen (30%ig): | 1250 kg |
| Spez. Oberfläche: | 19 m2/g |
| Freier Formaldehyd: | 0,1% |
| Primärpartikelgrösse: | 0,2 μm |

Beispiel 6: Nassmahlung des UF-Polymers

Eine 15 gew.%ige Suspension des gemäss Beispiel 1a hergestellten UF-Polymers wird nach der Neutralisation in einer Perlmühle wie folgt vermahlen:

In der Perlmühle wird das Mahlgut mit Glasperlen, die mit hoher Geschwindigkeit gerügrt werden, zerkleinert. Durch geeignete Einstellung der Durchflussgeschwindigkeit und der Glasperlengrösse lässt sich die Feinheit des Produktes steuern. Die Versuche werden mit einer kleinen 1,5 Liter-Laboperlmühle durchgeführt. Mit 2,0 mm Glasperlen werden folgende Ergebnisse erhalten:

| | Durchflussgeschwindigkeit Liter/h | mittlerer Kornduchmesser der Agglomerate (µm) | (gemessen mit Cilas 815) Laserscattering |
|---|---|---|---|
| a. | 8 | 5,7 | |
| b. | 20 | 8,2 | |
| c. | 40 | 9,5 | |

**Patentansprüche**

1. Wässrige Dispersionen enthaltend 15-35 Gew.% eines Harnstoff-Formaldehyd-Polymers (UF-Polymer), welches gekennzeichnet ist durch
   - ein Formaldehyd:Harnstoff (F:U)-Verhältnis von (1,25-1,40):1,
   - einen Gehalt an freiem Formaldehyd von weniger als 0,1 Gew.%,
   - eine spezifische Oberfläche von 5-30 m$^2$/g,
   - ein Porenvolumen von 2-4 cm$^3$/g,
   - eine mittlere Partikelgrösse von 0,05-1 µm, und
   - eine mittlere Agglomeratgrösse von 3-10 µm.

2. Dispersion nach Anspruch 1 enthaltend 20-30, insbesondere etwa 25 Gew.% des UF-Polymers.

3. Dispersion nach Anspruch 1, worin das UF-Polymer ein F:U-Verhältnis von 1,26:1 aufweist.

4. Dispersion nach Anspruch 1, worin das UF-Polymer weniger als 0,05 Gew.% an freiem Formaldehyd aufweist.

5. Dispersion nach Anspruch 1, worin das UF-Polymer eine spezifische Oberfläche von 7-25 m$^2$/g hat.

6. Dispersion nach Anspruch 1, worin das UF-Polymer ein Porenvolumen von 3-3,5 cm$^3$/g hat.

7. Dispersion nach Anspruch 1, worin das UF-Polymer eine mittlere Partikelgrösse von 0,1-1 µm hat.

8. Dispersion nach Anspruch 1, worin das UF-Polymer eine mittlere Agglomeratgrösse von 5-8 µm hat.

9. Verfahren zur Herstellung einer Dispersion nach Anspruch 1, wonach
   (i) Formäldehyd und Harnstoff in einem (F:U)-Verhältnis von (1,25-1,40):1 in einer wässrigen Lösung bei pH 6-9 und einer Temperatur von 40-100°C kondensiert werden,
   (ii) das Kondensat durch Zugabe einer verdünnten wässrigen Säure bei einer Temperatur von 20-100°C geliert wird,
   (iii) das Gel zerkleinert und in Wasser suspendiert wird, und die Suspension durch Zugabe einer verdünnten Base auf ca. pH 7-9 neutralisiert wird,
   (iv) die Suspension einer Nassmahlung unterzogen wird, bis die angegebene mittlere Agglomeratgrösse erreicht ist, und
   (v) das so vermahlene Produkt filtriert, gewaschen, gegebenenfalls zum Filterkuchen verpresst wird und anschliessend
   (vi) durch Einwirkung mechanischer Scherkräfte zur Dispersion verflüssigt wird.

10. Verfahren zur Herstellung einer Dispersion nach Anspruch 1, wonach
    (i) Formaldehyd und Harnstoff in einem (F:U)-Verhältnis von (1,25-1,40):1 in einer wässrigen Lösung bei pH 6-9 und einer Temperatur von 40-100°C kondensiert werden,

(ii) das Kondensat durch Zugabe einer verdünnten wässrigen Säure bei einer Temperatur von 20-100°C geliert wird,

(iii) das Gel zerkleinert und in Wasser suspendiert wird und die Suspension durch Zugabe einer verdünnten Base auf ca. pH 7-9 neutralisiert wird,

(iv) das Produkt filtriert, gewaschen, gegebenfalls zum Filterkuchen verpresst wird und anschliessend

(v) einer Nassmahlung unterzogen wird, bis die angegebene mittlere Agglomeratgrösse erreicht ist.

11. Verfahren nach Anspruch 9 oder 10, welches in Gegenwart eines Schutzkolloids durchgeführt wird.

12. Verfahren nach Anspruch 9 oder 10, wonach die in Stufe (ii) verwendete Säure Schwefelsäure oder insbesondere Sulfaminsäure ist.

13. Verfahren nach Anspruch 9 oder 10, wonach der Dispersion anschliessend ein Dispergiermittel beigegeben wird.

14. Filterkuchen erhältlich nach dem Verfahren gemäss Anspruch 9 oder 10, vorzugsweise mit einem Feststoffgehalt von 15-40 Gew.%.

15. Verwendung einer Dispersion nach Anspruch 1 als Weisspigment bei der Papierherstellung.